# EUROPEAN PATENT SPECIFICATION

(11) **EP 1 906 730 B1**
(45) Date of publication and mention of the grant of the patent: **04.03.2015**
(21) Application number: 06776094.2
(22) Date of filing: 28.06.2006
(51) Int. Cl.: A01N 25/30, A01N 25/04

(54) **SEED TREATMENT METHOD**
SAATBEIZVERFAHREN
TRAITEMENT DE SEMENCES

(30) Priority: 30.06.2005 EP 05014129
(43) Date of publication of application: 09.04.2008
(73) Proprietor: Syngenta Participations AG, 4058 Basel (CH)
(72) Inventor: BAUM, Stefan, 4333 Muenchwilen (CH); GUYON, Frederique, 4333 Muenchwilen (CH)
(74) Representative: Syngenta International AG
(86) International application number: PCT/EP2006/006259
(87) International publication number: WO 2007/003319

(56) References cited:
- WO-A-00/35284
- WO-A-00/35863
- WO-A-2005/036963
- WO-A-2005/089545
- WO-A-2005/089546
- WO-A2-2006/035316
- GB-A- 2 040 684

## Description

The present invention relates to methods of seed treatment, methods of protecting a seed, pest-resistant seeds, and compositions and formulations for use in such treatment.

Treating seeds with seed treatment pesticidal compositions for protection against pests, such as soil-borne, shoot and foliage pests, in useful crops is known.

WO 00/35284 and WO 05/36963 disclose aqueous suspension concentrate pesticide formulations. WO 05/89546 and WO 05/89545 discloses aqueous suspension insecticidal /nematicidal seed treatment formulations. WO 06/35316 discloses aqueous fungicidal seed treatment formulations.

Seed treatments are used on a large variety of crops to control many types of pests, especially during germination and emergence and early growth of the crop. Seed treatments are commonly used to ensure uniform stand establishment by protecting against soil borne diseases and insects. Systemic seed treatments may provide an alternative to traditional broadcast sprays of foliar fungicides or insecticides for certain early season airborne diseases and insects.

Seed treatments can play an important role in achieving uniform seedling emergence under certain conditions. The selective use of seed treatments can protect seeds or seedlings from early season disease and insect pests affecting crop emergence and growth. A few seed treatments may also be used to enhance crop performance during the growing season. For example, treatments containing Rhizobium inoculant have commonly been used to enhance the nitrogen fixing capability of legume crops.

Modem formulated seed treatment products are used by the farmer, seed treater and seed producer, and are often sophisticated with several active ingredients, optionally with inoculants, colourants, polymers and other formulation auxiliaries like wetting agents. These products should not be un-safe to the seed, the environment or user.

Following such treatment, the treated seed is handled and conveyed for packing and storage; this handling and conveying often results in the treated seed brushing against each other to cause the chemicals that were bound to the material to become unbound. The release of the chemicals is often in the form of air-borne particles of, for example, pesticides and other materials from the treating composition that on drying the seed form solid particles. This can result in the treated seed losing its pesticidal effectiveness and exposing workers in such treatment operations to health risks, through Inhalation and sensitisation, for example, eye irritancy, of the air-borne particles.

Also the time taken for the treating the seeds is economically very important; in particular the time taken to bag and store the treated seeds after the treatment step. If the step of storing the treated seeds is slowed down in any way, then whole treatment process can be disrupted, which can cause an economical disadvantage to the treater (e.g. farmer, seed treater or seed producer). Generally the treater desires a fast movement or flowability of the seeds after treatment so that they can treat a high volume of seeds over a period. The flowability characteristic can be reduced if the treatment results in the seeds adhering or sticking to each other because of the coarseness of the treated seeds. Particularly, in Northern countries where the summer season is short, the time between harvesting and next sowing is short and so that the treaters have to treat a large volume of seeds in a short period. Also important that is that the treated seeds flow consistently during the sowing or planting process.

The treaters also desire that the amount of pesticides loaded on, or adhered, to one seed is comparable to one and another within the same batch or lot of seeds, such that the pesticide loading is uniform across a batch or lot of treated seeds. This ensures that the adequate level of pesticide protection is afforded to each seed in the lot.

Accordingly, formulators are faced with the challenge of:
- how to improve the adherence of such particles to the plant propagation material.
- how to improve the flowability of treated seeds, especially in suspension compositions.
- how to ensure that pesticide loading onto a seed is uniform across a batch or lot of treated seeds.

It has now been found that treating the seeds with a certain defined loading of certain surface active compounds is effective in satisfying one or more of the above challenges when the pesticide loading on the seed is a defined amount.

Generally the way the certain surface active compounds are provided onto the seeds in the defined loading amount is not essential.

Generally a seed treatment composition of product is prepared by mixing or blending one or more pesticidal formulations with a liquid carrier, optionally with one or more formulation auxiliaries. The formulation auxiliaries may be in the form of a composition or mixture containing one or more auxiliaries.

Generally, the surface active compounds of the invention are provided to the seed treatment composition or product from one or more pesticidal formulations or from one or more formulation auxiliary composition, or directly as formulation auxiliary compounds or a combination of thereof.

Accordingly in a first aspect the present invention provides a method of seed treatment for a lot of seeds, which comprises treating the lot with one or more pesticides, and one or more formulation auxiliaries selected from (a) one or more alkoxylates and (b) one or more block polyoxyalkylene polymers, wherein the total loading of (a) and (b) is at least 10 grams/100kg of seeds, the ratio of the total loading of (a) and/or (b) to solids in the composition is greater than 0.5 and less than or equal to 2.0 and the loading of pesticides is at most 100grams/100kg of seeds; exempted is a loading of (a) and (b) of 18 to 24 grams/100kg of seeds when the loading of difenoconazole is 3.6 grams/100kg or when the loading of fludioxonil is 3.75 or 5 grams/100kg of seeds.

In a second aspect the present invention provides a method of seed treatment for a lot of seeds, which comprises treating the lot with a mixture comprising (a) one or more alkoxylates and (b) one or more block polyoxyalkylene polymers with a seed treatment composition comprising one or more pesticides, provided that the loading of (a) + (b) derived from the mixture on the lot is at least 10 grams/100kg of seeds, the ratio of the total loading of (a) and/or (b) to solids in the composition is greater than 0.5 and less than or equal to 2.0; exempted is a loading of an oleyl polyglycol ether derived from the mixture of 16 to 20 grams/100kg of seeds when the loading of difenoconazole derived from the pesticidal composition is 3.6 grams/100kg or when the loading of fludioxonil derived from the pesticidal formulation is 3.75 or 5 grams/100kg of seeds

The present invention is especially suitable for seed treatment methods wherein the pesticide loading is at most 100grams/100kg of seeds, preferably 1 to 100, preferably 2 to 75, more preferably 3 to 50, especially 4 to 40, advantageously 4 to 30.

The seed treatment method according to the present invention relates to the step in the overall process of treating a seed where the chemical treatment of the seed occurs. Generally the process of treating a seed involves steps such as cleaning the seeds so that soil and dust particles are removed and then the chemical treatment. The chemical treatment step can involve more than one stage interrupted by drying periods different chemicals (e.g. pesticides, polymer, inoculants) are treated. This can provide a coated or pelted seeds. The seed treatment compositions of the inventions can therefore also be used in such treatments.

The present invention is generally suitable for use with any type of seed treatment equipment, for example, continuous seed treatment equipment and batch seed treatment equipment. The present invention can also be used with other equipments combined with the treatment equipment to further improve the seed treatment method, such as seed flow accelerators which speed up the flowability of the seed lot. The invention can also be worked with seed treatment devices that operate under gravity movement. Those in the industry know such treatment device and auxiliary equipments.

In an embodiment, the present invention improves the flowability of the treated seed.

In another embodiment, the present invention improves the dust-off characteristics of the treated seed.

In a further embodiment, the present invention improves the uniformity of the pesticide loading in a batch or lot of treated seeds.

The term "batch" or "lot" is to be understood as group of seeds that are undergoing the seed treatment. This amount and weight of the seeds can vary depending on the treatment facility.

The term "loading" is to be understood as referring to the actual amount of a specific substance (for example, a pesticide or compound (a) or (b)) that is adhered on to each seed, based on bulk amount of seed, for example 100kg of seeds.

For the avoidance of doubt, the surface active compounds of the invention can either be one or more of a compound (a) or one or more of a compound (b) or can be any mixture thereof.

The surface active compounds (a) and (b) can be provided to the seed treatment composition or product from one or more pesticidal formulations or from one or more formulation auxiliary compositions or as compounds (a) or (b) (or a composition thereof). Preferably, the compounds (a) and (b) are present in one pesticidal formulation (as defined in the third to fifth aspects as pesticidal formulation (A)) or formulation auxiliary composition (as defined in the second aspect as the mixture).

Generally a pesticidal formulation is the product of the formulator, which contains the pesticide and one or more formulation auxiliaries. In the instance of the fifth aspect of the invention, the pesticidal formulation also comprises the compounds (a) and (b). Such formulations are commercial products available for sale and have to be storage stable over long periods and temperature ranges, and demonstrate compatibility with other pesticidal formulations, formulation auxiliaries so that when a seed treatment composition is prepared the resulting composition is suitable for treatment of seeds.

Similarly, a formulation auxiliary composition or mixture, as defined in the second aspect, is a composition containing two or more formulation auxiliaries that have been mixed or blended together to form a stable and compatible composition. The mixture does not contain a pesticide. It, therefore, contains compounds (a) and (b), optionally with a diluent, and can also contain other formulation auxiliary components.

Generally each of the seed treatment composition, formulation auxiliary mixture and pesticidal formulation are in the form of a liquid.

The present invention is especially suited for seed treatment composition and pesticidal formulation in the form of a suspension, preferably an aqueous suspension. The suspended particles are pesticides or substances having a melting point above 30°C (such as pigments, and carriers). Therefore, the loading, concentration and ratios indicated in any one of the aspects of the present invention in connection with pesticides preferably relate to pesticides that tend to demonstrate a degree of insolubility in water at room temperature.

The seed treatment composition or product can be the pesticidal formulation without any modification or dilution, but generally it is prepared by mixing or blending one or more pesticidal formulations with a liquid carrier, optionally with one or more formulation auxiliaries. In the instance the seed treatment composition comprises one or more pesticidal formulations with a liquid carrier, optionally with one or more formulation auxiliaries, it is generally prepared by treaters shortly before starting the treatment. Further, a seed treatment composition of the present invention containing a mixture of pesticidal formulations does not result in incompatibility difficulties, *i.e*., resulting in flocculation and inhomogeneity, between the different pesticidal formulations.

In the instance of the first or second aspect, the loading of (a) + (b) is preferably in the range of 10 to 100, more preferably 12 to 75, most preferably 14 to 50, especially 15 to 40, advantageously 15 to 35, grams/100kg of seeds.

In the instance of the first or second aspect, the loading of the pesticides is preferably in the range of 1 to 100, more preferably 2 to 75, most preferably 3 to 50, especially 4 to 40, advantageously 4 to 30, grams/100kg of seeds

In the instance of the first or second aspect, the seed treatment composition preferably has a ratio of compounds (a) and/or (b) to solids (for example, pesticides and other substances having a melting point above 30°C, such as pigment) in the range of 0.5 to 2.0, more preferably 0.55 to 1.5, especially 0.6 to 1.2.

In the instance of the first or second aspect, the seed treatment composition further comprises other surface active compounds (c) and the weight ratio of (a) and (b) to (c) is greater than 1.5, preferably in the range of 1.5 to 20, more preferably 3 to 10, especially 4 to 8; provided that the total loading of (a), (b) and (c) on the seeds is in the range of 15 to 120 grams/100kg of seeds. Preferably, the total loading of (a), (b) and (c) on the seeds, independent of the weight ratio of (a) and (b) to (c), is in the range of 10 to 115, most preferably 12 to 110, especially 14 to 105, advantageously 14 to 100, grams/100kg of seeds.

In the event surface active compounds (c) are present, the ratio of (a), (b) and (c) to solids is in the range 0.75 to 3.0 such as 0.8 to 2.5, preferably 0.90 to 2.2.

In the event that the pesticide formulations and, either or both of, compounds (a) and (b) are not together or simultaneously treated on to the seeds, as may be contemplated, for example, in the first and second aspects, the order of the treatment is not crucial. In such an event there would be two treatment steps, but there should not be a delay in the treatment of the second step, relating to either the treatment of pesticide formulation or surface active compounds (a) and (b) as appropriate, such that the surface active compounds and pesticide formulations are not able to homogenise on the seeds because the first step is dry. It is believed that the act of homogenising the surface active compounds and the solid particles, in particular those derived from the pesticidal formulations, such as pesticides and pigments, of the treatment composition on the seeds enables the improved seed treatment methods according to the present invention. Generally, a delay of up to two seconds is sufficient, preferably between 0.1 to 2, more preferably 0.5 to 1.5, 0.75 to 1.0, seconds. In a preferred embodiment, compounds (a) and/or (b), and the pesticidal formulations are applied on to the seeds substantially simultaneously; more preferably, compounds (a) and/or (b), the solid particles are applied on to the seeds in a single composition.

In an embodiment of the second aspect, the method of the invention exempts a loading of a compound (a) one or more alkoxylates, preferably compounds (a) and/or (b), of 18 to 24 grams/100kg of seeds when the loading of difenoconazole is 3.6 grams/100kg or when the loading of fludioxonil is 3.75 or 5 grams/100kg of seeds.

In an embodiment of the first or second aspect, the method of the invention exempts a loading of compounds (a) and/or (b), of 18 to 24 grams/100kg of seeds when the loading of fungicide is 3 to 6 grams/100kg of seeds.

The third aspect of the present invention relates to a method of treating seeds where a pesticidal formulation comprises the surface active compounds of the invention and pesticides for treating the seed. Preferably, each of the pesticides (α), solids having a melting point above 30°C (β), and surface active compounds (a) and/or (b) present on the treated seed are derived from a single pesticidal formulation, such as defined in the third aspect.

The pesticidal formulation comprising the surface active compounds of the invention and pesticides, and optionally one or more substances having a melting point above 30°C, demonstrates acceptable characteristics for use as a seed treatment formulation, such as good storage & temperature stability, good compatibility with other pesticidal formulations in a seed treatment composition or product.

In particular, it has been found that the defined proportions, by mass, of (I) (α) as active ingredients, one or more pesticides, and optionally (β) one or more substances having a melting point above 30°C and (II) (a) one or more alkoxylates and/or (b) one or more block polyoxyalkylene polymers are essential to meet the requirements of a satisfactory formulation.

In an embodiment, the ratio of (a) and (b) to (α) and (β) is in the range 0.55 to 1.5, especially 0.6 to 1.2.

In an embodiment of the third aspect, the total amount of (α) and (β) is in the range 3 to 15, preferably 3 to 12, more preferably 4 to 12, mass %.

In an embodiment of the third aspect, the total amount of (a) and (b) is in the range 5 to 25, preferably 6 to 20, more preferably 7 to 18, mass %.

In a preferred embodiment, the loading of (a) + (b) is preferably in the range of 10 to 100, more preferably 12 to 75, most preferably 14 to 50, especially 15 to 40, advantageously 15 to 35, grams/100kg of seeds.

In an embodiment, the loading of the pesticides is preferably in the range of 1 to 100, more preferably 2 to 75, most preferably 3 to 50, especially 4 to 40, advantageously 4 to 30, grams/100kg of seeds.

In a preferred embodiment of the third aspect, the formulation (A) comprises further formulation auxiliaries (c) other surface active compounds and the weight ratio of (a) and (b) to (c) is greater than 1.5, preferably in the range of 1.5 to 20, more preferably 3 to 10, especially 4 to 8; provided that the total loading of (a), (b) and (c) on the seeds is in the range of 15 to 120 grams/100kg of seeds. Preferably, the total loading of (a), (b) and (c) on the seeds, independent of the weight ratio of (a) and (b) to (c), is in the range of 10 to 115, most preferably 12 to 110, especially 14 to 105, advantageously 14 to 100, grams/100kg of seeds.

In the event surface active compounds (c) are present, the ratio of (a), (b) and (c) to (α) and (β) is in the range 0.75 to 3.0 such as 0.8 to 2.5, preferably 0.90 to 2.2.

Seed treatment formulations come in a variety of formulation types and in a variety of packaging sizes. Some are registered for use only by commercial applicators using closed application systems, others are readily available for on-farm use as dusts, slurries, water soluble bags, or liquid ready-to-use-formulations. Examples of formulation types are dry flowables (DF), liquid flowables (LF), true liquids (TL), emulsifiable concentrates (EC), dusts (D), wettable powders (WP) and others.

The seed treatment composition or product used to treat the seeds can be a formulated pesticidal formulation as manufactured by the formulator (e.g. as defined in the fifth aspect); or a diluted version of that, which could be prepared, for example, shortly before the treatment by the treater, with for example, a liquid carrier such as water ; or composition, which could be prepared by the treater before treatment, containing more than one pesticidal formulations and/or further formulation auxiliaries and liquid carrier.

The seed treatment compositions and formulations are generally directed to aqueous suspension compositions or formulations, because seed treatment with such compositions or formulations is more difficult, for example, the seeds may be susceptible to a reduced flowability and reduced adherence of the solid particles to seeds (increased dust-off).

The average size of the suspended particles is generally 0.1 to 20, specifically 1.5 to 5 micrometers when measured with a laser particle analyzer, e.g a CILAS 920 apparatus.

The viscosity of the aqueous pesticidal formulation (A) is generally 50 to 2000, more specifically 100 to 1000 mPas when measured with a BROOKFIELD viscometer with spindle 3 at 30 rpm and 25°C, and are stable and maintain their viscosity and homogeneity for at least 12 months at 25°C.

The seed treatment compositions and pesticidal formulations of the invention can be prepared by processes known in the art.

The pesticidal formulation (A) of the third aspect can have uses in other pesticide applications, such as foliar, drench or other plant propagation material treatment, but is preferably used in seed treatment.

The seed treatment composition or product according to the invention is useful in protecting a seed from damage by pests. Accordingly, the present invention also relates to a method of protecting a seed and plant organs which grow at a later point in time from damage by pests, especially plant pests, such as fungi pathogens, and representatives of the classes insecta, arachnida and nematoda. The specific type of pest control would depend on the pesticide present in the seed treatment composition, and a skilled person would select the appropriate pesticide for treatment on to the seed based on the pest pressure expected for that seed crop, and locality and time of the year it is to be planted. A pesticidally effective amount is an amount of one or more pesticides (such as fungicide, insecticide or nematicide) that is sufficient to reduce the pest damage to such an extent that an economically acceptable crop is achieved.

The seeds treated by a seed treatment composition of the present invention are, therefore, resistant to pest damage; accordingly, the present invention also provides a lot of pest-resistant seeds comprising at most 100 grams/100kg of seeds of one or more pesticides and at least 10 grams/100kg of seeds of (a) and (b); exempted is a loading of (a) and (b) of 18 to 24 grams/100kg of seeds when the loading of difenoconazole derived from the pesticidal composition is 3.6 grams/100kg or when the loading of fludioxonil derived from the pesticidal formulation is 3.75 or 5 grams/100kg of seeds. The pesticides and surface active compounds are adhered to the seeds.

The surface active compounds (a) and (b) have an average molecular weight of less than 10000, more preferably less than 7000, especially less than 5000, such as in the range of 200 to 3500. They enhance the seed treatment method, such as one or more of flowability, dust-off and distribution of the pesticide loading of the lot of seeds. Such compounds can also provide acceptable stability, dispersibility of the solids in the composition and formulation.

Surface active compound (a) is a nonionic emulsifier and dispersant and is preferably selected from aliphatic alcohol alkoxylates, oxo alcohol alkoxylates, aromatic alcohol alkoxylates, oil alkoxylates, fatty alcohol alkoxylates and fatty acid alkoxylates.

The surface active compounds (a) are, for example:
1) polyalkoxylated, preferably polyethoxylated, saturated and unsaturated aliphatic alcohols, having 8 to 24 carbon atoms in the alkyl radical, which is derived from the corresponding fatty acids or from petrochemical products, and having 1 to 100, preferably 2 to 50, ethylene oxide units (EO), it being possible for the free hydroxyl group to be alkoxylated, which are commercially available, for example as GENAPOL X, GENAPOL OA, GENAPOL OX, GENAPOL UD, GENAPOL LA and GENAPOL O series (CLARIANT), CROVOL M series (CRODA) or as LUTENSOL series (BASF), or are obtainable therefrom by etherification, for example GENAPOL X060 methyl ether,
2) polyalkoxylated, preferably polyethoxylated, arylalkylphenols, such as, for example, 2,4,6-tris(1-phenylethyl)phenol (tristyrylphenol) having an average degree of ethoxylation of between 10 and 80, preferably from 16 to 40, such as, for example SOPROPHOR BSU (RHODIA), EMULSOGEN TS series (CLARIANT) or HOE S 3474 (CLARIANT),
3) polyalkoxylated, preferably polyethoxylated, alkylphenols having one or more alkyl radicals, such as, for example, nonylphenol or tri-sec-butylphenol, and a degree of ethoxylation of between 2 and 40, preferably from 4 to 15, such as, for example, ARKOPAL N series or SAPOGENAT T series (CLARIANT),
4) polyalkoxylated, preferably polyethoxylated, hydroxyfatty acids or glycerides which contain hydroxyfatty acids, such as, for example, ricinine or castor oil, having a degree of ethoxylation of between 10 and 80, preferably from 25 to 40, such as, for example, the EMULSOGEN EL series (CLARIANT) or the AGNIQUE CSO series (COGNIS), and
5) polyalkoxylated, preferably polyethoxylated, sorbitan esters, such as, for example, ATPLUS 309 F (UNIQEMA) or the ALKAMULS series (RHODIA).
   Surface active compound (b) is a nonionic emulsifier and dispersant and preferably is an ethylene oxide and propylene oxide block co-polymer, for example:
6) a mono C2-6alkyl ether of a polyC2-4alkylene oxide block copolymer having at least a first polyalkylene oxide block region and a second polyalkylene oxide block region in which the polyalkylene oxide in said first region is different than the polyalkylene oxide in said second region. Preferably, the C2-6alkyl ether portion is a C3 alkyl ether, more preferably a C4alkyl ether, of the alkylene oxide block copolymer. Also preferably, the alkylene oxide block copolymer portion is preferably an ethylene oxide/propylene oxide block copolymer. Preferably the ethylene oxide portion represents from about 10 to about 90 mole % to from about 25 to about 75 mole % of the block copolymer. A particularly preferred material is available under the trade name NS-500LQ, available from Witco. The block copolmers may be di- and tri-block copolymers, for example from alkylene oxides, for example from ethylene oxide and propylene oxide, having average molar masses between 200 and less than 10 000, preferably from 1000 to 4000, g/mol, such as, for example, the GENAPOL PF series (CLARIANT), the PLURONIC series (BASF), the SYNPERONIC PE series (UNIQEMA), or the TOXIMUL series (STEPAN). A preferred group of ethylene oxide/propylene oxide block copolymers for use in the compositions of this invention are butyl based poly(oxypropylene) poly(oxyethylene) block copolymers having an average molecular weight in a range of 2,400 to 3,500 (e.g. TOXIMUL 8320, Stepan Chemical Co.);

Preferred nonionic emulsifiers and dispersants are, for example, polyethoxylated alcohols, polyethoxylated triglycerides which contain hydroxyfatty acids and polyethylene oxide/polypropylene oxide block copolymers.

In a embodiment, the surface active compound (a) or (b) has a HLB of 10 to 15, such as 11 to 14, preferably 11 to 13.

A preferred surface active compound is an oleyl alcohol poylglycol ether, such as with 8 to 20 ethylene oxide units (for example, GENOPOL O100, SYNPERONIC A20).

Examples of surface active compounds (c) are ionic surface active compounds (for example, cationic or anionic surface active compounds), and other non-ionic surface active compounds, such as vinylacetate/vinylpyrrolidone copolymers; alkylated vinylpyrrolidone copolymers; polyvinylpyrrolidone, such as AGRIMER series (ISP).

Anionic surface active compounds include phosphates, sulfonates, sulfates, metal or ammonium carboxylates, and amides. Examples include Geropon T77 (Rhodia) (N-methyl-N-oleoyltaurate Na salt); Soprophor 4D384 (Rhodia) (tristyrylphenol sulphate); Reax 825 (Westvaco) (ethoxylated lignin sulfonate); Stepfac 8171 (Stepan) (ethoxylated nonylphenol phosphate ester); Ninate 401-A (Stepan) (calcium alkylbenzene sulfonate); Emphos CS-131 (Witco) (ethoxylated nonylphenol phosphate ester); Atphos 3226 (Uniquema) (ethoxylated tridecylalcohol phosphate ester).

Cationic surface active compounds include alkanol amides of C₈-C₁₈ fatty acids and C₈-C₁₈ fatty amine polyalkoxylates, C₁₀-C₁₈ alkyldimethylbenzylammonium chlorides, coconut alkyldimethylaminoacetic acids, and phosphate esters of C₈-₁₈ fatty amine polyalkoxylates.

The pesticidal formulation and seed treatment composition of the present invention may also comprise at least one polymer from water-soluble and water-dispersible film-forming polymers, which generally has an average molecular weight of at least 10000 to about 100,000.

Generally a colouring agent, such as a dye or pigment, is included in the seed treatment product so that an observer can immediately determine that the seeds are treated. The colouring agent is also useful to indicate to the user the degree of uniformity of the coating applied. Generally, the colouring agent tends to have a melting point above 30°C, and therefore, is also suspended in the seed treatment composition and pesticidal formulation of the present invention. The pesticidal formulations tend to comprise between 0.1 to 10% by mass of a colouring agent.

The seed treatment product may also comprise at least one inorganic solid carrier. The inorganic solid carrier is a natural or synthetic solid material that is insoluble in water. The carrier is generally inert and acceptable in agriculture, especially on the treated seed or other propagation material. It can be chosen, for example, from clay, natural or synthetic silicates, titanium dioxide, magnesium silicate, aluminum silicate, talc, pyrophyllite clay, silica, attapulgite clay, kieselguhr, chalk, diatomaceous earth, lime, calcium carbonate, bentonite clay, Fuller's earth.

Pigments and carriers are examples of substances have a melting point above 30°C.

The seed treatment composition or pesticidal formulation may further comprise other formulation auxiliaries known in the art of pesticides. Such auxiliaries include, but are not limited to, antifreeze agents (such as but not limited to glycerine, ethylene glycol, propylene glycol, monopropylene glycol, hexylene glycol, 1-methoxy-2-propanol, cyclohexanol), buffering agents (such as but not limited to sodium hydroxide, phosphoric acid), biocides (such as but not limited to 1,2-benzisothiazolin-3-one), preserving agents (such as but not limited to derivatives of benzoic acid, sorbic acid, formaldehyde, a combination of methyl parahydroxybenzoate and propyl parahydroxybenzoate), stabilizing agents (such as but not limited to acids, preferably organic acids, such as dodecylbenzene sulfonic acid, acetic acid, propionic acid or butyl hydroxyl toluene, butyl hydroxyl anisole), thickening agents (such as but not limited to heteropolysaccharide and starches), and antifoaming agents (such as but not limited to those based on silicone, particularly polydimethylsiloxane). Such auxiliaries are commercially available and known in the art.

The seed treatment composition can also comprise or may be applied together and/or sequentially with further active compounds. These further compounds can be fertilizers or micronutrient donors or other preparations that influence plant growth, such as inoculants.

Examples of pesticides suitable for use in the present invention are one or more of a fungicide, insecticide, nematicide, molluscide or a combination thereof.

A single pesticide may have activity in more than area of pest control, for example, a pesticide may have fungicide, insecticide and nematicide activity. Specifically, aldicarb is known for insecticide, acaricide and nematicide activity, while metam is known for insecticide, herbicide, fungicide and nematicide activity, and thiabendazole and captan can provide nematicide and fungicide activity.

Examples of insecticides are acetamiprid, clothianidin, dinotefuran, imidacloprid, nitenpyram, thiacloprid, thiamethoxam, alpha-cypermethrin, beta-cyfluthrin, beta-cypermethrin, bifenthrin, bioallethrin, bioresmethrin, cycloprothrin, cyfluthrin, cyhalothrin, cypermethrin, cyphenothrin, deltamethrin, empenthrin, esfenvalerate, fenpropathrin, fenvalerate, flucythrinate, flumethrin, gamma-cyhalothrin, imiprothrin, lambda-cyhalothrin, methothrin, metofluthrin, permethrin, phenothrin, prallethrin, resmethrin, tau-fluvalinate, tefluthrin, tetramethrin, theta-cypermethrin, tralomethrin, transfluthrin, zeta-cypermethrin, abamectin, emamectin, spinosad, doramectin, eprinomectin, ivermectin, selamectin, and substituted milbemectins, such a compound of formula 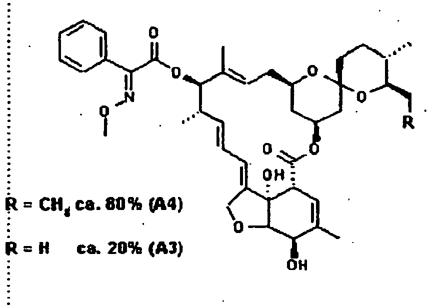 flubendiamide (3-iodo-*N*-(2-mesyl-1,1-dimethylethyl)-*N*-{4-[1,2,2,2-tetrafluoro-1-(trifluoromethyl)ethyl]-*o*-tolyl}phthalamide), fipronil and a compound of formula A-1

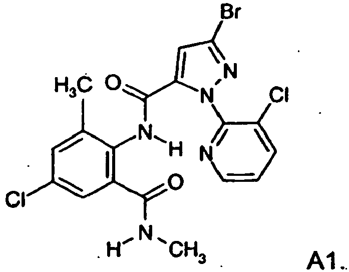

Preferably a fungicide compound is selected from (a) a strobilurin compound, (b) a DMI compound, (c) a benzimidzole compound, (d) a benzotriazine compound, (e) a phenylpyrrole compound, (f) a anilinopyrimidine compound, (g) a carboxamide compound, (h) a phenylamide:acylalanine, (i) a muliti-site class.

In an embodiment, independent of other embodiments and aspects, (a) the strobilurin compound is from one or more of a strobilurin type: methoxyacrylate compound, strobilurin type: oxazolidinedione compound, strobilurin type: imidazolinone compound, strobilurin type: oximinoacetamide compound, strobilurin analogue: dihydrodioxazine compound, strobilurin type: oximinoacetate compound, and strobilurin type: methoxycarbamate compound.

In an embodiment, independent of other embodiments and aspects, (a) the strobilurin compound is from one or more of fluoxastrobin, fenamidone, azoxystrobin, picoxystrobin, pyraclostrobin, famoxadone, dimoxystrobin, metominostrobin, kresoxim-methyl, and trifloxystrobin. Advantageous strobilurin compounds are fluoxastrobin and azoystrobin.

In an embodiment, independent of other embodiments and aspects, (b) the DMI compound is from one or more of a DMI: piperazine compound, DMI: triazole compound, DMI: imidazole compound, and DMI: pyrimidine compound.

The DMI: piperazine compound is triforine.

The DMI: triazole compound is selected from one or more of azaconazole, bitertanol, bromuconazole, cyproconazole, difenoconazole, diniconazole, epoxiconazole, fenbuconazole, fluquinconazole, flusilazole, flutriafol, hexaconazole, imibenconazole, ipconazole, metconazole, myclobutanil, paclobutrazol, propiconazole, prothioconazole, simeconazole, tebuconazole, tetraconazole, triadimefon, triadimenol, and triticonazole.

The DMI: imidazole compound is selected from imazalil, oxpoconazole fumarate, pefurazoate, penconazole, prochloraz, and triflumizole.

The DMI: pyridine compound is pyrifenox.

The DMI: pyrimidine compound is fenarimol.

In an embodiment, independent of other embodiments and aspects, (b) the DMI compound is from one or more of bitertanol, cyproconazole, difenoconazole, diniconazole, fluquinconazole, flutriafol, metconazole, prothioconazole, tebuconazole, triadimefon, triadimenol, triticonazole, prochloraz and imazalil.

In an embodiment, independent of other embodiments and aspects, (c) the benzimidzole compound is from one or more of carbendazim, fuberidazole and thiabendazole; advantageously one or more of fuberidazole and thiabendazole.

In an embodiment, independent of other embodiments and aspects, (d) the benzotriazine compound is triazoxide.

In an embodiment, independent of other embodiments and aspects, (e) the phenylpyrrole compound is from one or more of fenpiclonil and fludioxonil.

In an embodiment, independent of other embodiments and aspects, (f) the anilinopyrimidine compound is from one or more cyprodinil and pyrimethanil.

In an embodiment, independent of other embodiments and aspects, (g) the carboxamide compound is from one or more of boscalid, penthiopyrad, carboxin, silthiofam and 3-Difluoromethyl 1-methyl-1H-pyrazole-4-carboxylic acid (2-bicyclopropyl-2-yl-phenyl)-amide, which has the formula 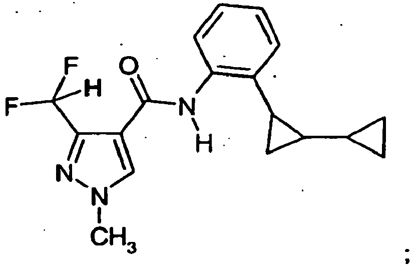 advantageously one or more carboxin and silthiofam.

In an embodiment, independent of other embodiments and aspects, (h) the phenylamide:acylalanine compound is one or more of benalaxyl, benalaxyl-M, metalaxyl, metalaxyl-M; advantageously one or more of metalaxyl and metalaxyl-M.

In an embodiment, independent of other embodiments and aspects, the fungicide is selected from a muliti-site class compound such as thiram, copper hydroxide, iminoctadine and mancozeb, especially thiram.

Preferably, the pesticides are selected from one or more of benalaxyl, benalaxyl-M, fuberdiazole, thiabendazole, azoxystrobin, fluoxastrobin, bitertanol, cyproconazole, difenoconazole, diniconazole, fluquinconazole, flutriafol, metalaxyl, metalaxyl-M, prothioconazole, tebuconazole, triadimenol, triticonazole, fludioxonil, triazoxide, cyprodinil, carboxin, silthiofam, ipconazole, trifloxystrobin, imazalil, guazatine, 3-difluoromethyl-1-methyl-1Hpyrazole-4-carboxylic acid (2-bicyclopropyl-2-yl-phenyl)-amide, thiamethoxam, imidacloprid, abamectin, spinosad, a bisamide, thiacloprid, lambda cyhalothrin, clothianidin, tefluthrin, beta-cyfluthrin, cypermethrin, alpha-cypermethrin, beta-cypermethrin, theta-cypermethrin, zeta-cypermethrin, and fipronil.

The seed treatment composition according to the third aspect may also contain further pesticidal formulations (B), which generally contain pesticides different to that/those present in formulation (A), and which can also contain surface active compounds (a) and/or (b), which can be the same or different to that/those in present in formulation (A).

The seed treatment composition according to the third aspect may also contain one or more formulation auxiliaries (C), which can be the same or different to that/those in pesticidal formulation (A).

The present invention is especially suitable for agronomically important plants, which refers to a plant that is harvested or cultivated on a commercial scale.

Examples of such agronomic plants (or crops) are cereals, such as wheat, barley, rye, oats, rice, maize or sorghum; beet, such as sugar or fodder beet; fruit, for example pome fruit, stone fruit and soft fruit, such as apples, pears, plums, peaches, almonds, cherries or berries, for example strawberries, raspberries or blackberries; legumes, such as beans, lentils, peas or soya beans; oil crops such as oil seed rape, mustard, poppies, olives, sunflowers, coconuts, castor, cacao or peanuts; the marrow family, such as pumpkins, cucumbers or melons; fibre plants such as cotton, flax, hemp or jute; citrus fruits such as oranges, lemons, grapefruits or tangerines; vegetables such as spinach, lettuce, asparagus, cabbage species, carrots, onions, chillis, tomatoes, potatoes, or capsicums; the laurel family such as avocado, Cinnamonium or camphor; and tobacco, nuts, coffee, egg plants, sugar cane, tea, pepper, grapevines, hops, the banana family, latex plants and ornamentals. Also important are forage crops such as grassed and legumes.

Suitable target crops also include transgenic crop plants of the foregoing types. The transgenic crop plants used according to the invention are plants, or propagation material thereof, which are transformed by means of recombinant DNA technology in such a way that they are - for instance - capable of synthesizing selectively acting toxins as are known, for example, from toxin-producing invertebrates, especially of the phylum Arthropoda, as can be obtained from Bacillus thuringiensis strains; or as are known from plants, such as lectins; or in the alternative capable of expressing a herbicidal or fungicidal resistance. Examples of such toxins, or transgenic plants which are capable of synthesizing such toxins, have been disclosed, for example, in EP-A-0 374 753, WO 93/07278, WO 95/34656, EP-A-0 427 529 and EP-A-451 878.

The invention is especially suitable for wheat, barley, rye, oats, rice, maize or sorghum.

A description of the structure of the pesticides mentioned herein can be found in the e-Pesticide Manual, version 3.1, 13th Edition, Ed. CDC Tomlin, British Crop Protection Coundl, 2004-05.

In each aspect and embodiment of the invention, "consisting essentially" and inflections thereof are a preferred embodiment of "comprising" and its inflections, and "consisting of" and inflections thereof are a preferred embodiment of "consisting essentially of" and its inflections.

The following Examples are given by way of illustration and not by way of limitation of the invention.

### Examples

### Preparation of seed treatment compositions

Examples C1 to C3 and Ex. 1-to 4 in Table 1 relate to the same pesticidal composition and the surface active compound (b) butyl PO/EO & C9-C18 PO/EO mixture was already present in the pesticidal formulation, as well other customary formulation auxiliaries (not indicated in the table 1 below). To this was added a surface active compounds indicated, diluted with water if appropriate, and mixed to prepare the seed treatment composition (or product or slurry).

Similarly C4 and Ex. 5 & 6 in Table 1 relate to the same pesticidal composition and the surface active compound (b) butyl PO/EO & C9-C18 PO/EO mixture was present in the pesticidal formulation, as well other customary formulation auxiliaries (not indicated in the table 1 below). To this was added the surface active compound indicated, diluted with water if appropriate, and mixed to prepare the seed treatment composition (or product or slurry).

### Preparation of pesticidal formulations

Examples C5 to C9 and Ex. 7 to 12 (Table 2) are prepared by finely grinding the active ingredient and intimately mixing with the formulation auxiliaries (including compounds (a) and/or (b)), resulting in a suspension concentrate for seed treatment.

The amount indicated in table 1 for each of the active ingredient and formulation auxiliaries (including compounds (a) and (b)) in the seed treatment composition is the amount of that component on the seed (loading) in grams/100kg of seeds.

The amount indicated in table 2 for each of the active ingredient and formulation auxiliaries (including compounds (a) and (b)) in the pesticidal formulation is based on mass%.

Examples of the invention Ex. 1 to 6 did not flocculate and are stable over at least 24 hours, while Examples Ex. 7 to 12 did not flocculate, and are stable over at least 2 years.

### Seed Treatment

Wheat seeds are treated with the seed treatment compositions Examples C1 to C8 and Ex. 1 to 12 by a Hege seed treatment device, and the loading of the pesticide, solids, surfactant and compounds (a) & (b) are provided in the Loading Information section of the Tables.

### Measurements

Flowability - The ability of the seeds to flow after treatment was compared to untreated seeds by allowing the seeds to flow through a funnel equipped with a pneumatic closable gate connected with a timer. The gate is opened for 2 seconds, and then the weight of seeds that flowed through the gate is weighed with a balance. The results are an average of several flowability assessments carried out immediately after seed treatment to 10 mins after treatment. The results indicated in the Tables for the flowability of the Examples are a percentage of the flowability of untreated seeds. The greater the weight the better the flowability of the seeds, and so a higher percentage indicates a better flowability (see Tables 1 & 2).

Dust-off - The amount of 'dust' given off by the seeds is measured by placing the treated seeds in a drum with ridges, which when the drum is rotated stimulates handling and conveying of the treated seeds. A precision airflow control system provides a constant flow of air that carries air borne particles through a coarse filter separator onto a filter. The dust quantity is measured by weighing the filter. The data from the 'dust-off' measurements is given in Table 2 as grams of dust per 100kg of seeds. The lower the amount the better the dust-off (see Tables 1 & 2).

Uniformity- A batch of hundred seeds is taken from the seed treatment and the pigment is extracted from each seed individually by using a solvent mixture in ultrasonic bath for 2 minutes. Then the amount of pigment extracted is quantified spectrometrically, and the amount of active ingredient adhered on the seed is calculated based on the seed treatment compositional details, and the seed classified according to the pesticide loading. The greater the number of seeds within a pesticide concentration range (e.g. 80 -140 % of the expected pesticide loading), the better the pesticide distribution characteristics of that seed treatment composition (see Table 3).

The data clearly show that seeds treated with surface active compounds of the present invention at a loading rate of at least 10 grams/100kg of seeds provide less air-borne particles, *i.e.,* better dust-off, better flowability and/or distribution of the pesticides.

**Table 1 -**

| **Seed Treatment Composition** | C1 | C2 | C3 | ex.1 | ex.2 | ex.3 | ex.4 | C4 | ex. 5 | ex.6 |
|---|---|---|---|---|---|---|---|---|---|---|
| ***active Ingredients*** | | | | | | | | | | |
| fungicide A | 5 | 5 | 5 | 5 | 5 | 5 | 5 | | | |
| fungicide B | | | | | | | | 6 | 6 | 6 |

| ***surface active compounds (c)*** | | | | | | | | | | |
|---|---|---|---|---|---|---|---|---|---|---|
| ethoxilated polyarylphenol sulfate, ammonium salt | 4 | 4 | 4 | 4 | 4 | 4 | 4 | 4 | 4 | 4 |
| alkyl benzene sulphonic acid, triethanolamine salt | | | | | | | | 2 | 2 | 2 |
| sodium-dioctyl-sulfosuccinate | | 16 | | | | | | | | |
| alkyl benzene sulphonic acid triethanolamine salt | | | 16 | | | | | | | |

| ***surface active compounds (a) & (b)*** | | | | | | | | | | |
|---|---|---|---|---|---|---|---|---|---|---|
| butyl PO/EO polymer & C9-C18 PO/EO polymer mixture | 4 | 4 | 4 | 4 | 4 | 4 | 4 | 4 | 4 | 4 |
| oleyl-polyglycolether ethylene oxide | | | | | | 16 | | | | |
| copolymer butyl capped PO/EO | | | | | 16 | | | | 10 | |
| castor oil ethoxylated | | | | 16 | | | | | | 10 |
| polyoxypropylene-polyoxyethylene, copolymer | | | | | | | 16 | | | |
| | | | | | | | | | | |

| **Summary of Loading Information** | | | | | | | | | | |
|---|---|---|---|---|---|---|---|---|---|---|
| pesticide loading, grams/100kg of seeds | 5 | 5 | 5 | 5 | 5 | 5 | 5 | 6 | 6 | 6 |
| solids (incl. pesticides) loading, grams/100kg of seeds | 15 | 15 | 15 | 15 | 15 | 15 | 15 | 22 | 22 | 22 |
| compounds (a) & (b) loading, grams/100kg seeds | 4 | 4 | 4 | 20 | 20 | 20 | 20 | 4 | 14 | 14 |
| compounds (a), (b) & (c) loading, grams/100kg seeds | 8 | 24 | 24 | 24 | 24 | 24 | 24 | 10 | 20 | 20 |
| compounds (a) & (b) /solid ratio | 0.3 | 0.3 | 0.3 | 1.3 | 1.3 | 1.3 | 1.3 | 0.2 | 0.6 | 0.6 |
| | | | | | | | | | | |

| **Results** | | | | | | | | | | |
|---|---|---|---|---|---|---|---|---|---|---|
| Flow test on wheat | 73.30% | 72.40% | 70.20% | 64% | 80.60% | 83.40% | 79.70% | 72.10% | 78.70% | 74.70% |
| Dust-off test in grams for 100kg seeds | 2.5 | 0.5 | 1.5 | 0.5 | - | - | 0.5 | - | - | - |

| | | | | | | | | | | |
|---|---|---|---|---|---|---|---|---|---|---|
| * the amounts indicated for each component is indicated as the loading on the seed, based on grams/100kg of seeds | | | | | | | | | | |

**Table 2 -**

| | C5 | ex. 7 | C6 | ex. 8 | C7 | ex. 9 | C8 | ex. 10 | ex. 11 | C9 | ex. 12 |
|---|---|---|---|---|---|---|---|---|---|---|---|
| **Pesticidal formulation** | | | | | | | | | | | |
| ***active ingredients*** | | | | | | | | | | | |
| fungicide A | | | 2.4 | 2.4 | 2.4 | 2.4 | 0.95 | 0.95 | 0.95 | 2.4 | 2.4 |
| fungicide B | 2.9 | 2.9 | | | | | | | | 2.4 | 2.4 |
| fungicide C | - | | | | 2.4 | 2.4 | | | | | |
| insecticide A | | | | | | | 3.8 | 3.8 | 3.8 | | |
| *pigment* | 7.6 | 7.6 | 4.8 | 5.7 | 7.6 | 7.6 | 3.8 | 3.8 | 3.8 | 4.8 | 7.7 |

| ***surface active compounds (c)*** | | | | | | | | | | | |
|---|---|---|---|---|---|---|---|---|---|---|---|
| ethoxylated polyarylphenol sulfate, ammonium salt | 1.9 | 1.9 | 1.9 | 1.9 | 1.9 | 1.9 | 1.9 | 1.9 | 1.9 | 2.9 | 1.9 |
| alkyl benzene sulphonic acid, triethanolamine salt | 0.95 | | | | | | | | | | |
| naphtalene sulfonic acid, Na salt condensated with formaldehyde | | | | | | | 1.9 | 0.95 | 0.95 | | |

| ***surface active compounds (a) & (b)*** | | | | | | | | | | | |
|---|---|---|---|---|---|---|---|---|---|---|---|
| copolymer butyl capped PO/EO | | 1.9 | | 0.95 | 1.9 | 1.9 | 0.95 | 9.5 | 3.8 | | |
| butyl PO/EO & C9.C18 PO/EO mixture | I 1.9 | | 1.9 | | | | | | | | 1.9 |
| oleyl-polyplycolether ethylene oxide | | 7.6 | | 7.6 | 1.9 | 7.6 | | 7.6 | 9.5 | 2.9 | 7.7 |
| | | | | | | | | | | | |

| **Loading Information** | | | | | | | | | | | |
|---|---|---|---|---|---|---|---|---|---|---|---|
| pesticide loading, grams/100kg of seeds | 6.0 | 6.0 | 5.0 | 5.0 | 10.0 | 10.0 | 25.0 | 25.0 | 25.0 | 10.0 | 10.0 |
| solids (incl. pesticides) loading, grams/100kg of seeds | 22 | 22 | 15 | 17 | 26 | 26 | 45 | 45 | 45 | 20 | 26 |
| compounds (a) & (b) loading, grams/100kg seeds | 4 | 19 | 4 | 17 | 8 | 19 | 2 | 34 | 27 | 6 | 19 |
| compounds (a), (b) & (c) loading, grams/ 100kg seeds | 10 | 23 | 8 | 21 | 11 | 23 | 24 | 100 | 81 | 11 | 23 |
| compounds (a) & (b) /solid ratio | 0.2 | 0.9 | 0.3 | 1.0 | 0.3 | 0.7 | 0.0 | 0.8 | 0.6 | 0.3 | 0.7 |
| | | | | | | | | | | | |

| **Results** | | | | | | | | | | | |
|---|---|---|---|---|---|---|---|---|---|---|---|
| Flow test on wheat | 78.9% | 87.7% | 72.3% | 82.8% | 66.3% | 76.1% | 68.1% | 80.9% | 81.8% | 68.0% | 75.0% |
| Dust-off test In grams for 100kg seeds | 1.6 | 0.2 | 1.4 | 0.3 | 1.8 | 0.1 | 1.25 | 0.05 | 0.1 | 1.1 | 0.25 |

| | | | | | | | | | | | |
|---|---|---|---|---|---|---|---|---|---|---|---|
| * the amount indicated for each component in the pesticidal formulation is indicated as mass% | | | | | | | | | | | |

**Table 3 -**

| | number of seeds per pesticide loading, % of expected | | | | | | | | | |
|---|---|---|---|---|---|---|---|---|---|---|
| | 60 | 80 | 100 | 120 | 140 | 160 | 180 | 200 | | 80-140% |
| C6 | 4 | 17 | 28 | 25 | 14 | 6 | 4 | 2 | | 84 |
| ex. 8 | 2 | 15 | 35 | 33 | 12 | 2 | 1 | 0 | | 95 |

## Claims

1. A method of seed treatment for a lot of seeds, which comprises treating the lot with one or more pesticides and one or more formulation auxiliaries selected from (a) one or more alkoxylates and (b) one or more block polyoxyalkylene polymers, wherein the total loading of (a) and (b) is at least 10 grams/100kg of seeds, the ratio of the total loading of (a) and/or (b) to solids in the composition is greater than 0.5 and less than or equal to 2.0 and the loading of pesticides is at most 100grams/100kg of seeds; exempted is a loading of (a) and (b) of 18 to 24 grams/100kg of seeds when the loading of difenoconazole is 3.6 grams/100kg or when the loading of fludioxonil is 3.75 or 5 grams/100kg of seeds.

2. A method of seed treatment for a lot of seeds, which comprises treating the lot with a mixture comprising (a) one or more alkoxylates and (b) one or more block polyoxyalkylene polymers with a seed treatment composition comprising one or more pesticides, provided that the total loading of (a) and (b) derived from the mixture on the lot is at least 10 grams/100kg of seeds, the ratio of the total loading of (a) and (b) to solids in the composition is greater than 0.5 and less than or equal to 2.0; exempted is a loading of an oleyl polyglycol ether derived from the mixture of 16 to 20 grams/100kg of seeds when the loading of difenoconazole derived from the pesticidal composition is 3.6 grams/100kg or when the loading of fludioxonil derived from the pesticidal formulation is 3.75 or 5 grams/100kg of seeds.

3. The method according to claim 2 wherein the method exempts a loading of (a) one or more alkoxylates of 18 to 24 grams/100kg of seeds when the loading of difenoconazole is 3.6 grams/100kg or the loading of fludioxonil is 3.75 or 5 grams/100kg of seeds.

4. The method according to any one of claims 1 to 3 wherein the loading of one or more pesticides on the lot is in the range of 1 to 100, preferably 2 to 75, more preferably 3 to 50, especially 4 to 40, advantageously 4 to 30, grams/100kg of seeds.

5. The method according to any one of claims 1 to 4 wherein the total loading of (a) and (b) is in the range of 10 to 100, preferably 12 to 75, more preferably 14 to 50, especially 15 to 40, advantageously 15 to 35, grams/100kg of seeds.

6. The method according to any one of claims 1 to 5 wherein the pesticide is selected from one or more of benalaxyl, benalaxyl-M, fuberdiazole, thiabendazole, azoxystrobin, fluoxastrobin, bitertanol, cyproconazole, difenoconazole, diniconazole, fluquinconazole, flutriafol, metalaxyl, metalaxyl-M, prothioconazole, tebuconazole, triadimenol, triticonazole, fludioxonil, triazoxide, cyprodinil, carboxin, silthiofam, Ipconazole, Trifloxystrobin, Imazalil, Guazatine, 3-Difluoromethyl-1-methyl-1Hpyrazole-4-carboxylic acid (2-bicyclopropyl-2-yl-phenyl)-amide, thiamethoxam, imidacloprid, abamectin, spinosad, a bisamide, thiacloprid, lambda cyhalothrin, clothianidin, tefluthrin, beta-cyfluthrin, cypermethrin, alpha-cypermethrin, beta-cypermethrin, theta-cypermethrin, zeta-cypermethrin, and fipronil.

7. The method according to any one of claims 1 to 6 wherein (a) is selected from aliphatic alcohol alkoxylates, oxo alcohol alkoxylates, aromatic alcohol alkoxylates, oil alkoxylates, fatty alcohol alkoxylates and fatty acid alkoxylates.

8. The method according to any one of claims 1 to 7 wherein (b) is an ethylene oxide and propylene oxide block co-polymer.

9. A method of protecting seed and plant organs which grow at a later point in time from damage from attack by pests by treating the seed with the method as defined in any one of claims 1 to 5.

10. A lot of pest resistant seeds comprising at most 100 grams/100kg of seeds of one or more pesticides and at least 10 grams/100kg of seeds of (a) and (b) as defined in any one of claims 1 to 8; exempted is a loading of (a) and (b) of 18 to 24 grams/100kg of seeds when the loading of difenoconazole derived from the pesticidal composition is 3.6 grams/100kg or when the loading of fludioxonil derived from the pesticidal formulation is 3.75 or 5 grams/100kg of seeds.

## Patentansprüche

1. Verfahren zur Samenbehandlung einer Charge an Samen, bei dem man die Charge mit einem oder mehreren Pestiziden und einem oder mehreren Formulierungshilfsstoffen ausgewählt aus (a) einem oder mehreren Alkoxylaten und (b) einem oder mehreren Blockpolyoxyalkylenpolymeren behandelt, wobei die Gesamtladung mit (a) und (b) mindestens 10 Gramm/100 kg an Samen beträgt, das Verhältnis der Gesamtbeladung mit (a) und/oder (b) zu den Feststoffen in der Zusammensetzung größer als 0,5 ist und kleiner als oder gleich 2,0 ist und die Beladung mit Pestiziden höchstens 100 Gramm/100 kg an Samen beträgt; ausgenommen ist eine Beladung mit (a) und (b) von 18 bis 24 Gramm/100 kg an Samen, wenn die Beladung mit Difenoconazol 3,6 Gramm/100 kg beträgt oder wenn die Beladung an Fludioxonil 3,75 oder 5 Gramm/100 kg an Samen beträgt.

2. Verfahren zur Samenbehandlung einer Charge an Samen, bei dem man die Charge mit einer Mischung umfassend (a) ein oder mehrere Alkoxylate und (b) ein oder mehrere Blockpolyoxyalkylenpolymere mit einer ein oder mehrere Pestizide umfassenden Samenbehandlungszusammensetzung behandelt, mit der Maßgabe, dass die auf die Mischung zurückzuführende Gesamtbeladung mit (a) und (b) bei der Charge mindestens 10 Gramm/100 kg an Samen beträgt, das Verhältnis der Gesamtbeladung mit (a) und (b) zu den Feststoffen in der Zusammensetzung größer als 0,5 und kleiner als oder gleich 2,0 ist; ausgenommen ist eine auf die Mischung zurückzuführende Beladung mit einem Oleylpolyglykolether von 16 bis 20 Gramm/100 kg an Samen, wenn die auf die pestizide Zusammensetzung zurückzuführende Beladung mit Difenoconazol 3,6 Gramm/100 kg beträgt oder die auf die pestizide Formulierung zurückzuführende Beladung mit Fludioxonil 3,75 oder 5 Gramm/100 kg an Samen beträgt.

3. Verfahren nach Anspruch 2, wobei bei dem Verfahren eine Beladung mit (a) einem oder mehreren Alkoxylaten von 18 bis 24 Gramm/100 kg an Samen ausgenommen ist, wenn die Beladung mit Difenoconazol 3,6 Gramm/100 kg beträgt oder die Beladung mit Fludioxonil 3,75 oder 5 Gramm/100 kg an Samen beträgt.

4. Verfahren nach einem der Ansprüche 1 bis 3, wobei die Beladung der Charge mit einem oder mehreren Pestiziden im Bereich von 1 bis 100, vorzugweise 2 bis 75, besonders bevorzugt 3 bis 50, insbesondere 4 bis 40, vorteilhaft 4 bis 30, Gramm/100 kg an Samen beträgt.

5. Verfahren nach einem der Ansprüche 1 bis 4, wobei die Gesamtbeladung mit (a) und (b) im Bereich von 10 bis 100, vorzugweise 12 bis 75, besonders bevorzugt 14 bis 50, insbesondere 15 bis 40, vorteilhaft 15 bis 35, Gramm/100 kg an Samen beträgt.

6. Verfahren nach einem der Ansprüche 1 bis 5, wobei das Pestizid aus einem oder mehreren der Folgenden ausgewählt ist: Benalaxyl, Benalaxyl-M, Fuberidazol, Thiabendazol, Azoxystrobin, Fluoxastrobin, Bitertanol, Cyproconazol, Difenoconazol, Diniconazol, Fluquinconazol, Flutriafol, Metalaxyl, Metalaxyl-M, Prothioconazol, Tebuconazol, Triadimenol, Triticonazol, Fludioxonil, Triazoxid, Cyprodinil, Carboxin, Silthiofam, Ipconazol, Trifloxystrobin, Imazalil, Guazatin, 3-Difluormethyl-1-methyl-1H-pyrazol-4-carbonsäure-(2-bicyclopropyl-2-ylphenyl)amid, Thiamethoxam, Imidacloprid, Abamectin, Spinosad, einem Bisamid, Thiacloprid, lambda-Cyhalothrin, Clothianidin, Tefluthrin, beta-Cyfluthrin, Cypermethrin, alpha-Cypermethrin, beta-Cypermethrin, theta-Cypermethrin, zeta-Cypermethrin und Fipronil.

7. Verfahren nach einem der Ansprüche 1 bis 6, wobei (a) aus aliphatischen Alkoholalkoxylaten, Oxoalkoholalkoxylaten, aromatischen Alkoholalkoxylaten, Ölalkoxylaten, Fettalkoholalkoxylaten und Fettsäurealkoxylaten ausgewählt ist.

8. Verfahren nach einem der Ansprüche 1 bis 7, wobei (b) ein Ethylenoxid- und Propylenoxid-Blockcopolymer ist.

9. Verfahren zum Schützen von Samen und Pflanzenorganen, die zu einem späteren Zeitpunkt wachsen, gegen eine Schädigung durch Schädlingsbefall, bei dem man die Samen durch das wie in einem der Ansprüche 1 bis 5 definierte Verfahren behandelt.

10. Charge an schädlingsresistenten Samen, umfassend maximal 100 Gramm/100 kg an Samen an einem oder mehreren Pestiziden und mindestens 10 Gramm/100 kg an Samen von wie in einem der Ansprüche 1 bis 8 definiertem (a) und (b); ausgenommen ist eine Beladung mit (a) und (b) von 18 bis 24 Gramm/100 kg an Samen, wenn die auf die pestizide Zusammensetzung zurückzuführende Beladung mit Difenoconazol 3,6 Gramm/100 kg beträgt oder wenn die auf die pestizide Formulierung zurückzuführende Beladung mit Fludioxonil 3,75 oder 5 Gramm/100 kg an Samen beträgt.

## Revendications

1. Méthode de traitement de semences pour un lot de semences, comprenant le traitement du lot par un ou plusieurs pesticides et un ou plusieurs auxiliaires de formulation choisis parmi (a) un ou plusieurs alcoxylates et (b) un ou plusieurs polymères blocs de polyoxyalkylène, où la charge totale de (a) et (b) est d'au moins 10 grammes/100 kg de semences, le rapport de la charge totale de (a) et/ou (b) par rapport aux matières solides de la composition étant supérieur à 0,5 et inférieur ou égal à 2,0, et la charge en pesticides étant d'au plus 100 grammes/100 kg de semences ; une charge de (a) et (b) allant de 18 à 24 grammes/100 kg de semences lorsque la charge en difénoconazole est de 3,6 grammes/100 kg ou lorsque la charge en fludioxonil est de 3,75 ou 5 grammes/100 kg de semences, étant exemptée.

2. Méthode de traitement de semences pour un lot de semences, comprenant le traitement du lot par un mélange comprenant (a) un ou plusieurs alcoxylates et (b) un ou plusieurs polymères blocs de polyoxyalkylène avec une composition de traitement de semences comprenant un ou plusieurs pesticides, à condition que la charge totale de (a) et (b) dérivée du mélange sur le lot soit d'au moins 10 grammes/100 kg de semences, le rapport de la charge totale de (a) et (b) par rapport aux matières solides de la composition étant supérieur à 0,5 et inférieur ou égal à 2,0 ; une charge d'un éther oléylique de polyglycol dérivé du mélange allant de 16 à 20 grammes/100 kg de semences lorsque la charge en difénoconazole dérivée de la composition pesticide est de 3,6 grammes/100 kg ou lorsque la charge en fludioxonil dérivée de la formulation pesticide est de 3,75 ou 5 grammes/100 kg de semences, étant exemptée.

3. Méthode selon la revendication 2, dans laquelle la méthode exempte une charge de (a) un ou plusieurs alcoxylates de 18 à 24 grammes/100 kg de semences lorsque la charge en difénoconazole est de 3,6 grammes/100 kg ou lorsque la charge en fludioxonil est de 3,75 ou 5 grammes/100 kg de semences.

4. Méthode selon l'une quelconque des revendications 1 à 3, dans laquelle la charge en un ou plusieurs pesticides sur le lot se trouve dans la plage allant de 1 à 100, préférablement de 2 à 75, plus préférablement de 3 à 50, notamment de 4 à 40, de manière avantageuse de 4 à 30, grammes/100 kg de semences.

5. Méthode selon l'une quelconque des revendications 1 à 4, dans laquelle la charge totale en (a) et (b) se trouve dans la plage allant de 10 à 100, préférablement de 12 à 75, plus préférablement de 14 à 50, notamment de 15 à 40, de manière avantageuse de 15 à 35, grammes/100 kg de semences.

6. Méthode selon l'une quelconque des revendications 1 à 5, dans laquelle le pesticide est choisi parmi un ou plusieurs parmi le bénalaxyle, le bénalaxyle-M, le fubéridazole, le thiabendazole, l'azoxystrobine, la fluoxastrobine, le bitertanol, le cyproconazole, le difénoconazole, le diniconazole, le fluquinconazole, le flutriafol, le métalaxyle, le métalaxyle-M, le prothioconazole, le tébuconazole, le triadiménol, le triticonazole, le fludioxonil, le triazoxide, le cyprodinil, la carboxine, le silthiofam, l'ipconazole, la trifloxystrobine, l'imazalil, la guazatine, l'acide 3-difluorométhyl-1-méthyl-1H-pyrazole-4-carboxylique (2-bicyclopropyl-2-ylphényl)amide, le thiaméthoxam, l'imidacloprid, l'abamectine, le spinosad, un bisamide, le thiacloprid, la lambda-cyhalothrine, la clothianidine, la téfluthrine, la bêta-cyfluthrine, la cyperméthrine, l'alpha-cyperméthrine, la bêtacyperméthrine, la thêta-cyperméthrine, la zêtacyperméthrine, et le fipronil.

7. Méthode selon l'une quelconque des revendications 1 à 6, dans laquelle (a) est choisi parmi les alcoxylates d'alcools aliphatiques, les alcoxylates d'oxoalcools, les alcoxylates d'alcools aromatiques, les alcoxylates d'huiles, les alcoxylates d'alcools gras et les alcoxylates d'acides gras.

8. Méthode selon l'une quelconque des revendications 1 à 7, dans laquelle (b) est un copolymère bloc d'oxyde d'éthylène et d'oxyde de propylène.

9. Méthode de protection de semences et d'organes végétaux qui se développent à un point ultérieur dans le temps contre une attaque par des nuisibles, par le traitement des semences par la méthode telle que définie selon l'une quelconque des revendications 1 à 5.

10. Lot de semences résistantes aux nuisibles, comprenant au plus 100 grammes/100 kg de semences d'un ou plusieurs pesticides et au moins 10 grammes/100 kg de semences de (a) et (b) tels que définis selon l'une quelconque des revendications 1 à 8 ; une charge de (a) et (b) de 18 à 24 grammes/100 kg de semences lorsque la charge en difénoconazole dérivée de la composition pesticide est de 3,6 grammes/100 kg ou lorsque la charge en fludioxonil dérivée de la formulation pesticide est de 3,75 ou 5 grammes/100 kg de semences, étant exemptée.
